# EUROPÄISCHE PATENTSCHRIFT

(11) **EP 0 806 379 B1**
(45) Veröffentlichungstag und Bekanntmachung des Hinweises auf die Patenterteilung: **04.07.2001**
(21) Anmeldenummer: 97104114.0
(22) Anmeldetag: 12.03.1997
(51) Int. Cl.: B65G 43/02, F16G 3/06

(54) **Einrichtung zum Überwachen der Schrauben-Vorspannung einer Klemmeinrichtung eines Becherwerksgurtes**
Device for monitoring the thighteness of the bolts from a belt-clamping device of a bucket elevator
Dispositif pour la surveillance du serrage des boulons d'un élément de jonction de la courroie d'un élévateur à godets

(30) Priorität: 08.05.1996 DE 19618366
(43) Veröffentlichungstag der Anmeldung: 12.11.1997
(73) Patentinhaber: Beumer Maschinenfabrik GmbH & Co. KG, 59269 Beckum (DE)
(72) Erfinder: Lauhoff, Hans, 59269 Beckum (DE); Tippkemper, Richard, 59302 Oelde-Stromberg (DE); Thiel, Damian, 59302 Oelde (DE)
(74) Vertreter: Hoormann, Walter, Dr.-Ing.

(56) Entgegenhaltungen:
- DE-A- 1 810 387
- DE-A- 1 919 327
- DE-A- 2 243 579
- DE-A- 3 346 802
- DE-C- 4 039 769
- DE-C- 4 444 264
- US-A- 4 087 800

## Beschreibung

Die Erfindung betrifft eine Einrichtung zum Überwachen der Schrauben-Vorspannung einer verschraubten Klemmeinrichtung zum Verbinden der Gurtenden eines Becherwerkgurtes, dessen Gurtenden zwischen Klemmstücken eingespannt sind, die mit vorgespannten Schrauben miteinander verbunden sind, mit einem an der zu überwachenden Schraubverbindung angeordneten Schaltteil, welches sich im normalen Betriebszustand, also bei ausreichend großer Vorspannung der Schraubverbindung, in einer Ruhestellung befindet, und welches sich bei einem Unterschreiten eines vorgegebenen Vorspannungs-Grenzwertes selbsttätig in eine ein Warn-oder Abschaltsignal auslösende Schaltstellung bewegt.

Um einen Becherwerksgurt endlos zu machen, werden seine Endabschnitte an der Verbindungsstelle nach außen abgewinkelt, zwischen dem dortigen Gurtverlauf entsprechend angepaßte Klemmstücke geführt und diese mit mehreren jeweils aus einer Schraube und i.a. zwei Muttern bestehenden Schraubverbindungen verschraubt, wobei die zweite Mutter als Kontermutter dient, die ein Lösen der Schraubverbindung verhindern soll.

Die Schraubverbindungen einer derartigen Klemmeinrichtung sind mit einer erheblichen Vorspannung anzuziehen, um ausreichend große Klemm- bzw. Andrückkräfte zwischen den Klemmstücken und den zwischen ihnen angeordneten Gurtenden zu erzeugen, die ein Ausreißen der Gurtenden aus der Klemmeinrichtung verhindern, da dieses einen Absturz des mit den (im allgemeinen z.T. mit Schüttgut gefüllten) Bechern versehenen Gurtes mit einem entsprechenden Betriebsausfall sowie einer erheblichen Beschädigung des Becherwerkes zur Folge hätte. Während des Betriebes sinkt die aufgebrachte Vorspannung durch Setzerscheinungen in den Gewinden der Schrauben und Muttern sowie insbesondere in den eingeklemmten Gurtabschnitten erheblich ab. Dieses ist auch dann noch der Fall, wenn die Schraubverbindungen nach gewisser Betriebszeit (ggfs. sogar mehrfach) nachgespannt werden, weil die Setzerscheinungen in den eingespannten Gurtabschnitten sich über einen längeren Zeitraum fortsetzen können, so daß sich die aufgebrachte Vorspannung (ggfs. bis auf Null) entsprechend verringert.

Es ist daher aus Sicherheitsgründen geboten, den Spannungszustand der Schraubverbindungen von derartigen Klemmeinrichtungen während des Betriebes ständig zu überwachen, und sicherzustellen, daß ein Warnsignal oder ein Abschaltsignal für den Becherwerksantrieb erzeugt wird, wenn die Schraubenvorspannung einen vorgegebenen unteren Grenzwert erreicht hat, damit das Bedienungspersonal darauf aufmerksam gemacht wird, daß die Schraubverbindungen der Klemmeinrichtung nachgespannt werden müssen.

Dabei reicht es im allgemeinen aus, wenn nur eine Schraubverbindung der Klemmeinrichtung entsprechend überwacht wird, da sich gezeigt hat, daß sich die Vorspannung der einzelnen Schraubverbindungen einer Klemmeinrichtung während des Betriebes im allgemeinen mehr oder weniger gleichmäßig verändert, so daß eine einzelne Schraubverbindung für sämtliche Schraubverbindungen repräsentativ ist, zumal der vorgegebene Vorspannungs-Grenzwert so hoch gewählt wird, daß er noch deutlich über dem kritischen Wert liegt, bei dem es zu einem Lösen der Gurtendabschnitte aus der Klemmeinrichtung kommt, so daß es unkritisch ist, wenn der Vorspannungs-Grenzwert ggfs. an anderen Schraubverbindungen bereits erreicht ist und etwas unterschritten wird, bevor dieses an der überwachten Schraubverbindung der Fall ist.

Bei einer aus der DE 33 46 802 C2 bekannten gattungsgemäßen Überwachungseinrichtung besteht das Schaltteil aus einem quer zur Gurtlängsrichtung an der Klemmeinrichtung angeordneten und geführten Bolzen, der von einer Druckfeder beaufschlagt ist und im normalen Betriebszustand gegen die von der Feder erzeugte Kraft von einem Widerlager in seiner Ruhestellung gehalten wird, in welcher sich sein Betätigungsende benachbart zu dem entsprechenden Gurtrand im Gurtbereich befindet. Das Widerlager besteht aus einer zwischen einem Formstück und der zu überwachenden Schraubverbindung angeordneten Scheibe, die an einer in Richtung auf das Schaltteil vorstehenden Nase mit dem Schaltteil in formschlüssigem Eingriff ist und dieses gegen die Kraft der das Schaltteil beaufschlagenden Feder in seiner Ruhestellung hält, solange die aufgrund der Vorspannung der Schraubverbindung erzeugten, an der Scheibe wirksamen Reibungskräfte ein Drehmoment erzeugen, welches größer als das von dem Schaltteil ausgeübte Drehmoment ist. Sinken die an der Scheibe wirksamen Reibungskräfte aufgrund einer Verminderung der Schraubenvorspannung ab, so wird ein Zustand erreicht, bei dem das aufgrund der Federbeaufschlagung von dem Schaltteil auf die Scheibe ausgeübte Drehmoment größer ist als das von den an der Scheibe wirksamen Reibungskräften erzeugte Gegenmoment, so daß das Schaltteil die Scheibe um die Längsachse der entsprechenden Schraube aus seinem Bewegungspfad herausdreht und in seine Schaltstellung gelangt, in welcher sein Betätigungsende seitlich über den Gurt soweit vorsteht, daß es beim Umlauf des Gurtes mit einem stationär am Becherwerksgehäuse angeordneten Schalter in Eingriff kommt, der dabei ein Warnoder Abschaltsignal auslöst.

Dabei läßt sich die Auslösung der bekannten Überwachungseinrichtung bei einem vorgegebenen Vorspannungs-Grenzwert für die zu überwachende Schraubverbindung recht genau und einfach bewirken, indem man bei diesem Vorspannungs-Grenzwert das Drehmoment empirisch ermittelt, mit dem die Scheibe beaufschlagt werden muß, um aus ihrer Sperrstellung für das Schaltteil in ihre Freigabestellung verdreht werden zu können, und indem man danach die das Schaltteil beaufschlagende Federkraft bemißt, die das über das Schaltteil auf die Scheibe ausgeübte Drehmoment erzeugt.

Obwohl sich diese bekannte Überwachungseinrichtung prinzipiell bestens bewährt hat, kann es aufgrund der mechanischen Schaltung zwischen dem mit dem Gurt umlaufenden Schaltteil und dem dem Schaltteil zugeordneten, stationär angeordneten Schalter insb. bei einem Gurtschieflauf zu Schwierigkeiten kommen, also dann, wenn sich der Gurt während des Betriebes aus seiner vorgesehenen mittigen Stellung zu den Gurttrommeln zur einen oder anderen Seite hin bewegt. Verschiebt sich nämlich der Gurt von der mit dem stationären Schalter versehenen Seite weg, so kann es dazu kommen, daß der Schalter von dem Schaltteil nicht betätigt wird, obwohl sich dieses aus seiner Ruhestellung in seine Schaltstellung bewegt hat. Verschiebt sich dagegen der Gurt auf den Trommeln in Richtung auf den Schalter, so kann es dazu kommen, daß das Schaltteil in seiner Schaltstellung seitlich soweit vorsteht, daß es mit dem Schaltergehäuse kollidiert und den Schalter beschädigt bzw. abreißt, oder daß es an das Becherwerksgehäuse bzw. dort vorhandene Anbackungen läuft und dabei verbogen oder abgerissen wird, so daß es den Schalter nicht mehr betätigen kann.

Der vorliegenden Erfindung liegt daher die Aufgabe zugrunde, die bekannte Überwachungseinrichtung so zu verbessern, daß bei einem Unterschreiten des vorgegebenen Vorspannungs-Grenzwertes ein Warn- bzw. Abschaltsignal mittels des Schaltteils berührungslos auszulösen ist, ohne daß es hierfür einer Betätigung eines stationären Schalters bedarf.

Die Lösung dieser Aufgabe besteht erfindungsgemäß darin, daß im Bereich des Schaltteils am Gurt ein passiver erster elektrischer Schwingkreis und benachbart zu dem Bewegungspfad der Klemmeinrichtung stationär ein von einer Wechselstromquelle mit konstanter Frequenz erregter zweiter elektrischer Schwingkreis angeordnet ist, wobei die Stromstärke im zweiten Schwingkreis beim Passieren der beiden Schwingkreise einen Sollwert aufweist, wenn sich das Schaltteil in seiner Ruhestellung befindet; daß das Schaltteil bei seiner Bewegung aus seiner Ruhestellung in seine Schaltstellung den ursprünglichen Schaltzustand des ersten Schwingkreises selbsttätig so verändert, daß die beim Passieren der beiden Schwingkreise vorhandene Rückwirkung des ersten Schwingkreises auf die Stromstärke im zweiten Schwingkreis gegenüber der Rückwirkung im ursprünglichen Schaltzustand verändert wird; und daß im zweiten Schwingkreis ein mit einer Auswert- und Steuereinrichtung verbundener Strommesser angeordnet ist, wobei die Auswerteinrichtung die jeweils beim Passieren der beiden Schwingkreise gemessene Ist-Stromstärke mit der Soll-Stromstärke im normalen Betriebszustand vergleicht und die Steuereinrichtung ein Warn- bzw. Abschaltsignal erzeugt, wenn die Ist-Stromstärke von der Soll-Stromstärke um eine vorgegebene Differenz abweicht.

Unter einem Schwingkreis versteht man bekanntlich einen zwei Energiespeicher aufweisenden elektrischen Stromkreis, der imstande ist, freie Schwingungen des Stromes und der Spannung auszuführen, wobei der eine Energiespeicher für die elektrische Feldenergie ein Kondensator und der andere Energiespeicher für die magnetische Feldenergie eine Spule ist. Außerdem enthält jeder Schwingkreis irgendwelche Verluste, die in einem Ohmschen Widerstand dargestellt werden können, nachstehend jedoch unberücksichtigt bleiben, da sie für den Erfindungsgegenstand grundsätzlich im wesentlichen unerheblich sind.

Freie Schwingungen führt ein elektrischer Schwingkreis stets dann aus, wenn er z.B. durch einen Schaltstoß angestoßen und sich dann selbst überlassen wird. Speist man ihn dagegen mit Wechselstrom, so führt er (nach einer kurzen Übergangszeit) erzwungene Schwingungen aus. Ist dabei die Erregerfrequenz im wesentlichen gleich der Eigenfrequenz, so spricht man von einem Resonanzkreis bzw. von Resonanzbetrieb.

Bei der erfindungsgemäßen Einrichtung wird von dem Phänomen Gebrauch gemacht, daß sich der Wechselstromfluß in einem von einer Wechselstromquelle erregten Schwingkreis verändert, wenn ein zweiter elektrischer Schwingkreis in den Bereich seines Magnetfeldes verbracht wird. Dabei ist diese Veränderung (ggfs. vernachlässigbar) klein, wenn die Eigenfrequenz der beiden Schwingkreise von der Erregerfrequenz des aktiven (= erregten) Schwingkreises erheblich abweicht. Die Rückwirkung des passiven Schwingkreises auf die Stromstärke des erregten Schwingkreises vergrößert sich jedoch, wenn (wenigstens) der erregte Schwingkreis in Resonanz betrieben wird, und ist besonders groß, wenn beide Schwingkreise eine Eigenfrequenz aufweisen, die im wesentlichen der Erregerfrequenz des erregten Schwingkreises entspricht. Um beim Absinken der Schraubenvorspannung unter den vorgegebenen Vorspannungsgrenzwert zu einem gut verwertbaren, eindeutigen Steuerungssignal zu kommen, ist daher bevorzugt vorgesehen, daß der erregte zweite Schwingkreis in Resonanz betrieben wird, und höchst bevorzugt weiterhin vorgesehen, daß auch die Eigenfrequenz des passiven ersten Schwingkreises (wenigstens) in einer der beiden Stellungen des Schaltteils im wesentlichen auf die Erregerfrequenz bzw. die Eigenfrequenz des erregten zweiten Schwingkreises abgestimmt ist, also ebenfalls in Resonanz betrieben wird.

Wenn die Eigenfrequenzen der beiden (geschlossenen) Schwingkreise also bspw. in der Ruhestellung des Schaltteils auf die Erregerfrequenz des zweiten Schwingkreises abgestimmt sind, so wird die Stärke des in dem ersten Schwingkreis fließenden Wechselstroms jeweils deutlich verringert, wenn der erste Schwingkreis den zweiten Schwingkreis passiert. Die dabei auftretende Stromstärke stellt die Soll-Stromstärke für den normalen Betriebszustand dar, in dem die Vorspannung der überwachten Schraubverbindung noch oberhalb des Vorspannungs-Grenzwertes liegt.

Unterschreitet aber die Vorspannung der überwachten Schraubverbindung den vorgegebenen Vorspannungs-Grenzwert, so daß sich das Schaltteil aus seiner Ruhestellung in seine Schaltstellung bewegt und dabei den Schaltzustand des ersten Schwingkreises und damit die Rückwirkung des ersten Schwingkreises auf den zweiten Schwingkreis bzgl. dessen Stromstärke verändert, indem es bspw. den zunächst geschlossenen ersten Schwingkreis öffnet oder den (geschlossen bleibenden) ersten Schwingkreis verstimmt, so wird der Wechselstromfluß im ersten Schwingkreis nicht bzw. kaum verändert, wenn der zweite Schwingkreis den ersten Schwingkreis passiert, so daß die Auswerteinrichtung feststellt, daß der Ist-Wert der Stromstärke von deren Soll-Wert beim Passieren der beiden Schwingkreise erheblich abweicht, und ein entsprechendes Signal an die Steuereinrichtung gibt.

In entsprechender Weise könnte verfahren werden, wenn die Eigenfrequenz des zweiten Schwingkreises im normalen Betriebszustand gegenüber der Resonanzfrequenz des ersten Schwingkreises verstimmt ist, und wenn sie durch die Bewegung des Schaltteils aus dessen Ruhestellung in dessen Schaltstellung so verändert wird, daß sie in der Schaltstellung des Schaltteils auf die Resonanzfrequenz des ersten Schaltkreises abgestimmt ist. Da dieses jedoch im praktischen Betrieb mit größeren Unsicherheiten verbunden ist als die zuvor erläuterte Variante, ist diese aus Gründen der Betriebssicherheit zu bevorzugen.

Bevorzugt ist der von der Wechselstromquelle gespeiste zweite Schwingkreis als Reihenschwingkreis ausgebildet, dessen Spule und Kondensator in Reihe geschaltet sind, und der (passive) erste Schwingkreis als Parallelschwingkreis.

Bei einer ersten Ausführungsform kann das Schaltteil Bestandteil des ersten Schwingkreises sein bzw. mit einem Teil des ersten Schwingkreises verbunden sein, um beim Bewegen des Schaltteils aus dessen Ruhestellung in seine Schaltstellung eine Verstimmung bzw. eine Abstimmung der beiden Schwingkreise zu bewirken. So kann das Schaltteil bspw. der Spulenkern des ersten Schwingkreises sein bzw. mit diesem so verbunden sein, daß der Spulenkern bei der Bewegung des Schaltteils aus dessen Ruhestellung in dessen Schaltstellung relativ zur Spule unter Veränderung der Induktivität des ersten Schwingkreises bewegt wird.

Bei einer bevorzugten Ausgestaltung der vorliegenden Erfindung ist das Schaltteil so ausgebildet bzw. angeordnet, daß es bei seiner Bewegung aus seiner Ruhestellung in seine Schaltstellung den zuvor geschlossenen ersten Schwingkreis öffnet oder den zuvor geöffneten ersten Schwingkreis schließt und dadurch gegenüber dem vorherigen Zustand des ersten Schwingkreises - und damit zugleich in Relation zum zweiten Schwingkreis - "verstimmt". Hierfür kann im Bewegungspfad des Schaltteils ein Schalter des ersten Schwingkreises angeordnet sein, der von dem Schaltteil betätigt wird, wenn sich dieses aus seiner Ruhestellung in seine Schaltstellung bewegt, wobei der Schalter entweder geöffnet oder geschlossen wird. Stattdessen kann im Bewegungspfad des Schaltteils auch ein Leitungsabschnitt des ersten Schwingkreises angeordnet sein, der von dem Schaltteil durchtrennt wird, wenn sich dieses aus seiner Ruhestellung in seine Schaltstellung bewegt.

Die Induktivitäten der Schwingkreise sind bevorzugt als stabförmige Spulen ausgebildet, wobei die Spulen der beiden Schwingkreise bevorzugt im wesentlichen parallel zueinander und weiterhin so angeordnet sind, daß sie sich beim Passieren der beiden Schwingkreise im wesentlichen überdecken, wobei es sich weiterhin als besonders zweckmäßig herausgestellt hat, wenn die Spulen rechtwinklig zur Längsrichtung des Gurtes angeordnet sind.

Bevorzugte Ausgestaltungen der vorliegenden Erfindung sind in den Unteransprüchen beschrieben.

Die Erfindung ist nachstehend an einem Ausführungsbeispiel unter Bezugnahme auf eine Zeichnung weiter erläutert. Es zeigt:
Fig. 1: eine schematisierte Seitenansicht des oberen Teils eines Gurtbecherwerkes mit der die Gurtenden verbindenden Klemmeinrichtung;
Fig. 2: eine vergrößerte Darstellung des in Fig. 1 mit einer strichpunktierten Linie II umrahmten Abschnittes, nämlich der Klemmeinrichtung sowie eines Teiles der Überwachungseinrichtung;
Fig. 3: eine Ansicht der Darstellung gem. Fig. 2 in Richtung des Pfeiles III in Fig. 2 gesehen;
Fig. 4: eine Ansicht der Darstellung gem. Fig. 3 in Richtung des Pfeiles IV in Fig. 3 gesehen;

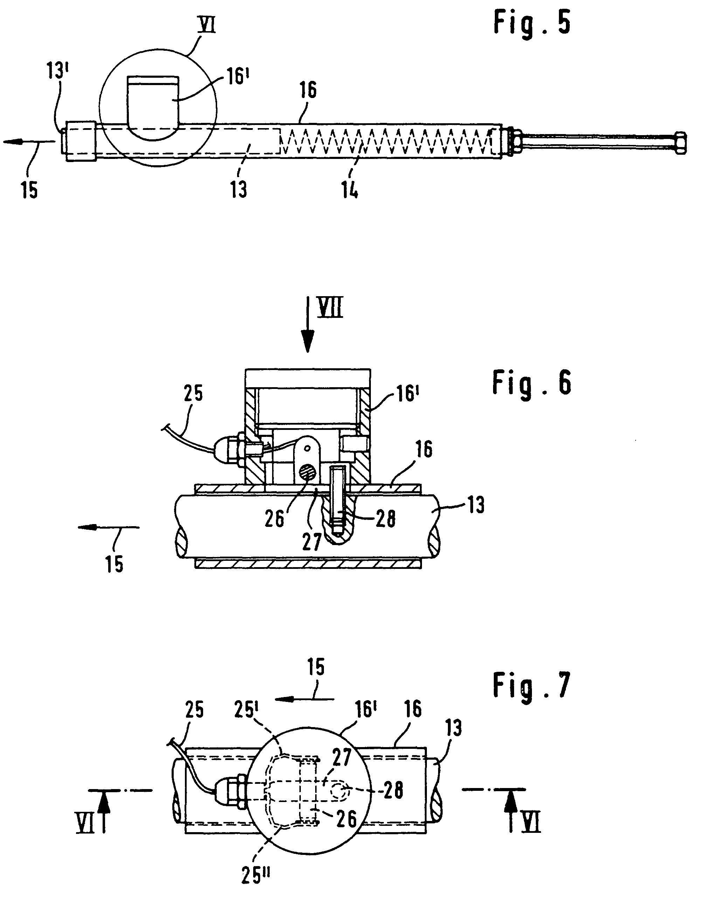

Fig. 5: eine das Schaltteil enthaltende Einzelheit gem. den Darstellungen in den Fig. 2 bis 4;
Fig. 6: den in Fig. 5 mit einem Kreis VI umrahmten Abschnitt in einer vergrößerten Schnittdarstellung (in Richtung der Schnittlinie VI-VI in Fig. 7 gesehen);
Fig. 7: eine Draufsicht auf die Darstellung gem. Fig. 6 in Richtung des Pfeiles VII in Fig. 6 gesehen; und
Fig. 8: einen Schaltplan der beiden Schwingkreise der Überwachungseinrichtung.

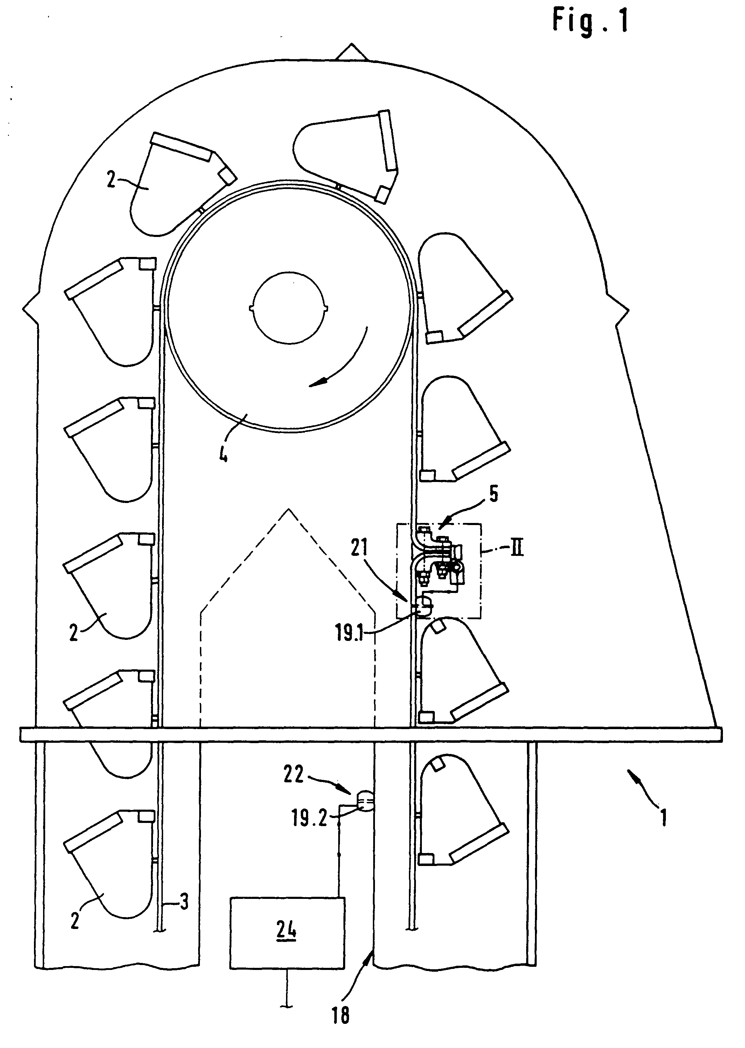

Fig. 1 zeigt in einer schematischen Seitenansicht den oberen Abschnitt eines im ganzen mit 1 bezeichneten Becherwerkes mit Bechern 2, die jeweils mit gleichem Teilungsabstand an einem endlosen Gurt 3 befestigt sind, der um zwei Trommeln 4 umläuft, von denen in Fig. 1 nur eine Trommel erkennbar ist. Dabei ist eine Trommel 4 als Antriebstrommel ausgebildet, die von einem nicht dargestellten Antrieb antreibbar ist, und die andere Trommel als Spanntrommel, mittels welcher der Gurt 3 zu spannen ist.

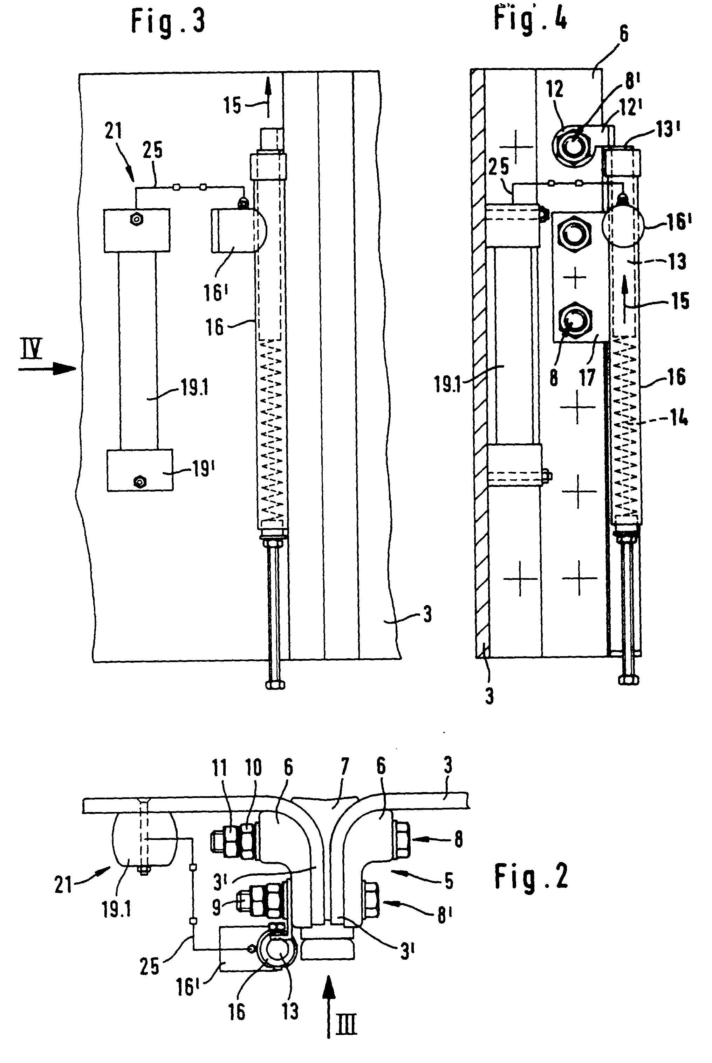

Der Gurt 3 ist mit einer im ganzen mit 5 bezeichneten Klemmeinrichtung endlos gemacht, die am besten aus Fig. 2 erkennbar ist. Hierfür sind die beiden Endabschnitte 3' des Gurtes 3 rechtwinklig aus der Gurtverlaufsebene nach außen herausgeführt und zwischen zwei aus Metall bestehenden Formstücken 6,6 sowie einem mittleren Formkeil 7 angeordnet und mit zwölf Schraubverbindungen 8 verschraubt, die jeweils aus einer Schraube 9, einer Mutter 10, einer Kontermutter 11 sowie Unterlegscheiben bestehen. Bei den Schrauben 9 handelt es sich um Dehnschrauben, die bei der Montage mit einer erheblichen Vorspannung angezogen werden, um ein Lösen der Gurtendabschnitte 3' aus der Klemmeinrichtung während des Betriebes zu verhindern. Da es aufgrund von Setzerscheinungen in dem Gewinden der Schrauben 9 und Muttern 10,11 sowie insbesondere in den Gurtendabschnitten 3' alsbald zu einer erheblichen Verringerung der zunächst aufgebrachten Vorspannung kommt, wird das Anziehen der Schraubverbindungen 8 auf eine vorgegebene Vorspannung nach kurzer Betriebszeit (ggfs. mehrfach) wiederholt.

Da es dennoch während des weiteren Betriebes zu einer erheblichen Verringerung der Vorspannung kommen kann und sichergestellt werden muß, daß die Gurtverbindung an der Klemmeinrichtung 5 aufrechterhalten bleibt, ist die Klemmeinrichtung 5 mit einer Einrichtung zum Überwachen der Vorspannung der Schraubverbindungen 8 versehen, die ein Warn- oder Abschaltsignal erzeugt, wenn die Vorspannung der Schraubverbindungen 8 einen vorgegebenen Vorspannungs-Grenzwert unterschreitet. Da sich gezeigt hat, daß die Vorspannung sämtlicher Schraubverbindungen 8 im wesentlichen gleichmäßig absinkt, reicht es aus, wenn lediglich eine Schraubverbindung 8' (s. Fig. 4) überwacht wird, wie dieses nachfolgend im einzelnen beschrieben ist. Dabei sei darauf verwiesen, daß in Fig. 4 nur drei Schraubverbindungen eingezeichnet sind, während die übrigen lediglich durch Kreuze angedeutet sind.

An der hinsichtlich ihrer Vorspannung überwachten Schraubverbindung 8' ist zwischen der Mutter 10 (bzw. deren Unterlegscheibe) und dem dortigen Formstück 6 eine mit einer Durchgangsbohrung für die Schraube 9 versehene Sperrscheibe 12 mit einer Nase 12' angeordnet, welche nach außen über das Formstück 6 vorsteht und während des normalen Betriebes ein Widerlager für ein bolzenförmiges Schaltteil 13 bildet, welches von einer bezüglich ihrer Spannkraft einstellbaren Feder 14 in seiner Längsrichtung von einer Federkraft beaufschlagt ist, so daß das der Nase 12' der Sperrscheibe 12 zugekehrte Ende 13' des Schaltteils 13 ein entsprechendes Drehmoment auf die Sperrscheibe 12 ausübt. Dabei wird die auf das Schaltteil 13 ausgeübte Federkraft der Feder 14 so eingestellt, daß die Sperrscheibe 12 in der in Fig. 4 dargestellten Sperrstellung verbleibt, wenn die Vorspannung der Schraubverbindung 8' oberhalb eines vorgegebenen Vorspannungs-Grenzwertes ist, und daß die an der Sperrscheibe 12 wirksamen Reibungskräfte bei einem Unterschreiten des vorgegebenen Vorspannungs-Grenzwertes nicht mehr ausreichen, um ein Gegenmoment zu erzeugen, welches die Sperrscheibe 12 in ihrer Sperrstellung hält. Vielmehr werden die durch die Vorspannung der Schraubverbindung 8' an der Sperrscheibe 12 wirksamen Reibungskräfte bei einem Unterschreiten des Vorspannungs-Grenzwertes so klein, daß das von ihnen erzeugte Gegenmoment kleiner wird als das von dem Schaltteil 13 bzw. dessen Feder 14 erzeugte Drehmoment auf die Nase 12' der Sperrscheibe 12, so daß die Sperrscheibe 12 um die Längsachse der Schraubverbindung 8' aus dem Bewegungspfad des Schaltteils 13 (in Fig. 4 im Gegenuhrzeigersinne) herausgedreht wird und sich das Schaltteil 13 aus seiner in den Fig. 2 bis 4 dargestellten Ruhestellung in Richtung des Pfeiles 15 in eine Schaltstellung bewegt und in dieser ein Warn- oder Abschaltsignal auslöst.

Bevor dieses im einzelnen beschrieben wird, sei noch darauf verwiesen, daß das bolzenförmige Schaltteil 13 in einer buchsenförmigen Führung 16 geführt ist, die mit einer Lasche 17 unter Verwendung zweier Schraubverbindungen 8 an ein Formstück 6 geschraubt ist.

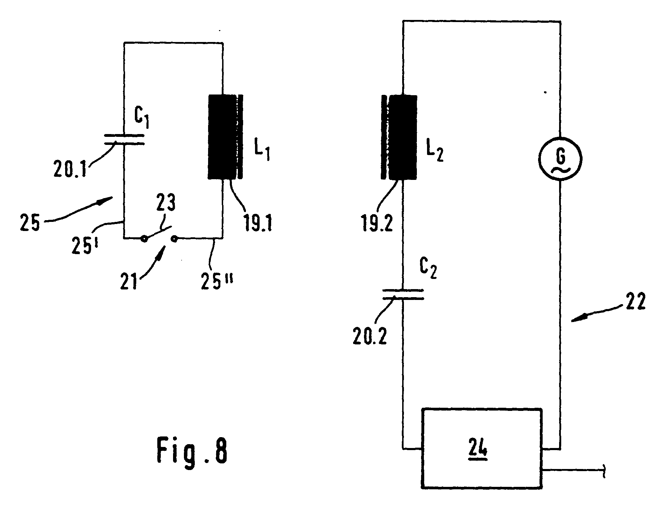

Um beim Auslösen des Schaltteils 13 ein Warn- oder Abschaltsignal zu erzeugen, ohne daß dabei wie im Stand der Technik ein am stationären Becherwerksgehäuse 18 angeordneter Schalter unter entsprechender Berührung mechanisch betätigt zu werden braucht, ist im Bereich des Schaltteils 13 am Gurt 3 ein eine Spule 19.1 sowie einen Kondensator 20.1 aufweisender erster elektrischer Schwingkreis 21 angeordnet und benachbart zu dem endlosen Bewegungspfad der während des Betriebes um die Trommeln 4 umlaufenden Klemmeinrichtung 5 am stationären Becherwerksgehäuse 18 ein eine Spule 19.2 sowie einen Kondensator 20.2 enthaltender zweiter Schwingkreis 22 (s. Fig. 8). Der stationär angeordnete zweite Schwingkreis 22 wird von einer durch einen Sinusgenerator G gebildeten Wechselstromquelle mit einer Frequenz von 10 kHz gespeist, wobei die mit einem Eisenkern versehene Spule 19.2 mit einer Induktivität L₂ und der Kondensator 20.2 mit einer Kapazität C₂ in Reihe geschaltet sind, während die ebenfalls mit einem Eisenkern versehene Spule 19.1 mit einer Induktivität L₁ und der Kondensator 20.1 mit einer Kapazität C₁ des ersten Schwingkreises 21 parallel geschaltet sind, wobei der in Fig. 8 in diesen Schwingkreis 21 eingezeichnete Schalter 23 im normalen Betriebszustand geschlossen ist.

Im zweiten Schwingkreis 22 ist eine im ganzen mit 24 bezeichnete Meß-, Auswert- und Steuereinrichtung enthalten, die u.a. einen Strommesser aufweist, mit dem der Wechselstromfluß in dem aktiven zweiten Schwingkreis 22 zu messen und als Bezugsgröße an die Auswerteinrichtung weiterzuleiten ist. Die Eigenfrequenzen der beiden Schwingkreise 21,22 sind im normalen Betriebszustand (wenn sich das Schaltteil 13 in seiner gesperrten Ruhestellung befindet) auf die Erregerfrequenz abgestimmt. Dieses hat zur Folge, daß die in der Einrichtung 24 gemessene Stromstärke aufgrund der entstehenden Kopplung der beiden Schwingkreise 21, 22 jeweils absinkt, wenn der am Gurt 3 angeordnete erste Schwingkreis 21 am zweiten Schwingkreis 22 vorbeibewegt wird. Wird daher in der in der Einrichtung 24 enthaltenen Auswerteinrichtung beim Vorbeilauf der mit dem ersten Schwingkreis 21 versehenen Klemmeinrichtung 5 eine entsprechende Änderung der Stromstärke festgestellt, so ist dieses ein Zeichen für einen ordnungsgemäßen Betriebszustand, so daß der Betrieb fortgesetzt werden kann.

Wird nun aber bei einem Unterschreiten des Vorspannungs-Grenzwertes an der überwachten Schraubverbindung 8' das Schaltteil 13 in der beschriebenen Weise entriegelt und bewegt sich aus seiner Ruhestellung in seine Schaltstellung, so verändert es dabei den Schaltzustand des ersten Schwingkreises 21 und damit dessen Rückwirkung auf die Stromstärke im zweiten Schwingkreis 22 beim Passieren der beiden Schwingkreise 21, 22, indem es den ersten Schwingkreis 21 öffnet, so daß der Wechselstromfluß in dem aktiven zweiten Schwingkreis 22 beim Vorbeilauf der Klemmeinrichtung 5 praktisch nicht mehr verändert wird, die Auswerteinrichtung also keine erhebliche Veränderung des Wechselstromflusses im zweiten Schwingkreis 22 mehr feststellt und daraufhin ein Warn- oder Abschaltsignal erzeugt.

Wie in den Fig. 3 und 4 anhand der Spule 19.1 des ersten Schwingkreises 21 erkennbar ist, sind die Induktivitäten L₁ und L₂ der Schwingkreise 21,22 als stabförmige Spulen ausgebildet und (s. Fig. 1) parallel zueinander angeordnet, und zwar so, daß sie sich beim Passieren ohne seitlichen Versatz überdecken. Die Längserstreckung der beiden Spulen 19.1 und 19.2 ist rechtwinklig zur Laufrichtung des Gurtes 3.

Die Kondensatoren 20.1 bzw. 20.2 sind jeweils in ein Gehäuse 19' der betreffenden Spule 19 integriert und in der Zeichnung nicht erkennbar.

Der den Schalter 23 enthaltende eine Leitungsabschnitt 25 des ersten Schwingkreises 21 ist vom Kondensator 20.1 bzw. von der Spule 19.1 zweiadrig zu einem buchsenförmigen Ansatz 16' der Führung 16 für das Schaltteil 13 geführt, wobei die beiden Adern 25' bzw. 25'' innerhalb des Ansatzes 16' jeweils als elektrisch leitende Federzunge ausgebildet sind, zwischen denen ein elektrisch leitendes Verbindungselement 26 angeordnet (nämlich klemmend gehalten) ist, welches zusammen mit einem radial von dem bolzenförmigen Schaltteil 13 nach außen vorstehenden, in einen Schlitz 27 der buchsenförmigen Führung 16 greifenden Stift 28 den "Schalter" 23 des ersten Schwingkreises 21 bildet und von dem Stift 28 aus seiner in Fig. 7 erkennbaren Kontaktposition gedrückt wird, wenn sich das Schaltteil 13 aus seiner Ruhestellung in Richtung des Pfeiles 15 in seine Schaltstellung bewegt, so daß der erste Schwingkreis 21 dabei unterbrochen wird. Dieses hat zur Folge, daß es aufgrund der durch das Öffnen des ersten Schwingkreises 21 erfolgten "Verstimmung" des ersten Schwingkreises 21 bezüglich der Resonanzfrequenz des zweiten Schwingkreises 22 nicht mehr zu einer elektrischen Kopplung der beiden Schwingkreise 21,22 kommt, wenn sich der erste Schwingkreis 21 am zweiten Schwingkreis 22 vorbei bewegt, weil der erste Schwingkreis 21 nach seiner Unterbrechung dabei den zweiten Schwingkreis 22 nicht mehr bezüglich dessen Wechselstromfluß beeinflussen kann, so daß die dem zweiten Schwingkreis 22 zugeordnete Auswerteinrichtung beim Passieren der beiden Schwingkreise 21,22 einen i.w. konstanten Wechselstromfluß im zweiten Schwingkreis 22 feststellt und daraufhin ein Warn- bzw. Abschaltsignal auslöst.

Dabei ist die in die Einrichtung 24 integrierte Auswerteinrichtung so programmiert, daß sie ein Warn- bzw. Abschaltsignal erst dann auslöst, wenn nach einem mehrfachen (z.B. dreimaligen) Vorbeilauf des ersten Schwingkreises 21 am zweiten Schwingkreis 22 im zweiten Schwingkreis 22 keine Veränderung der Stromstärke festgestellt worden ist, um sicherzustellen, daß der Betrieb des Becherwerkes nicht bereits aufgrund einer zufälligen Fehlmessung unterbrochen wird.

Wie bereits weiter oben ausgeführt worden ist, könnte die Anordnung stattdessen beispielsweise auch so getroffen sein, daß der im ersten Schwingkreis 21 vorgesehene Schalter 23 im normalen Betriebszustand geöffnet ist, so daß der zweite Schwingkreis 22 beim Passieren des ersten Schwingkreises 21 hinsichtlich der Größe seines Wechselstromflusses im wesentlichen unbeeinflußt bleibt, und geschlossen wird, wenn sich das Schaltteil 13 aus seiner Ruhestellung in seine Schaltstellung bewegt, so daß bei einer entsprechenden Resonanzabstimmung der beiden Schwingkreise 21,22 im geschlossenen Zustand des ersten Schwingkreises 21 die Stromstärke im stationären zweiten Schwingkreis 22 beim Passieren der beiden Schwingkreise 21,22 verändert wird. Weiterhin könnte die Anordnung so getroffen sein, daß der erste Schwingkreis 21 während des Betriebes stets geschlossen ist, er also stets einen funktionsfähigen Schwingkreis bildet, wobei jedoch die Abstimmung der beiden Schwingkreise 21,22 durch das Schaltteil 13 verändert wird, wenn sich dieses aus seiner Ruhestellung in seine Schaltstellung bewegt, und zwar vorzugsweise derart, daß im normalen Betriebszustand eine Abstimmung der beiden Eigenfrequenzen vorliegt, die jeweils zu einer erheblichen Änderung der Größe des Wechselstromflusses im zweiten Schwingkreis 22 führt, wenn sich der erste Schwingkreis 21 an dem zweiten Schwingkreis 22 vorbeibewegt, und eine erhebliche Verstimmung der Resonanzfrequenz des ersten Schwingkreises 21 erfolgt, wenn sich das Schaltteil 13 in seine Schaltstellung bewegt, so daß dadurch die Größe des Wechselstromflusses im zweiten Schwingkreis 22 keine erhebliche Veränderung erfährt, wenn die beiden Schwingkreise 21,22 einander passieren.

## Patentansprüche

1. Einrichtung zum Überwachen der Schrauben-Vorspannung einer verschraubten Klemmeinrichtung (5) zum Verbinden der Gurtenden (3') eines Becherwerksgurtes (3), mit einem an der Schraubverbindung (8') angeordneten Schaltteil (13), welches sich bei ausreichend großer Vorspannung in einer Ruhestellung befindet, und sich bei einem Unterschreiten eines vorgegebenen Vorspannungs-Grenzwertes selbsttätig in eine ein Warn- oder Abschaltsignal auslösende Schaltstellung bewegt, dadurch gekennzeichnet, daß im Bereich des Schaltteils (13) der Klemmeinrichtung (5) am Gurt (3) ein erster elektrischer Schwingkreis (21) mit einer vorgegebenen Resonanzfrequenz und benachbart zu dem Bewegungspfad der Klemmeinrichtung (5) stationär ein zweiter elektrischer Schwingkreis (22) angeordnet ist, wobei ein (aktiver) Schwingkreis (22) von einer Wechselstromquelle (G) gespeist ist und die Resonanzfrequenzen der beiden Schwingkreise (21,22) in einer der beiden Stellungen des Schaltteils (13) aufeinander abgestimmt sind; daß die Resonanzfrequenz des ersten Schwingkreises (21) durch das Schaltteil (13) verändert wird, wenn sich das Schaltteil (13) aus seiner Ruhestellung in seine Schaltstellung bewegt; und daß in dem aktiven Schwingkreis (22) ein mit einer Auswert- und Steuereinrichtung (24) verbundener Strommesser angeordnet ist, wobei die Auswerteinrichtung, die beim Passieren der beiden Schaltkreise (21,22) gemessene Ist-Stromstärke mit der Soll-Stromstärke im normalen Betriebszustand vergleicht, und die Steuereinrichtung ein Warn- bzw. Abschaltsignal erzeugt, wenn die Ist-Stromstärke von der Soll-Stromstärke um eine vorgegebene Differenz abweicht.

2. Einrichtung nach Anspruch 1, dadurch gekennzeichnet, daß der von der Wechselstromquelle (G) gespeiste aktive Schwingkreis (22) ein Reihenresonanzkreis ist, dessen Spule (19.2) und Kondensator (20.2) in Reihe geschaltet sind.

3. Einrichtung nach Anspruch 2, dadurch gekennzeichnet, daß der andere (passive) Schwingkreis (21) als Parallelresonanzkreis geschaltet ist.

4. Einrichtung nach einem oder mehreren der vorhergehenden Ansprüche, dadurch gekennzeichnet, daß der stationär angeordnete zweite Schwingkreis (22) von der Wechselstromquelle (G) gespeist ist.

5. Einrichtung nach einem oder mehreren der vorhergehenden Ansprüche, dadurch gekennzeichnet, daß das Schaltteil (13) Bestandteil des ersten Schwingkreises (21) bzw. mit einem Teil des ersten Schwingkreises (21) verbunden ist.

6. Einrichtung nach Anspruch 5, dadurch gekennzeichnet, daß das Schaltteil (13) der Spulenkerne des ersten Schwingkreises (21) bzw. mit diesem so verbunden ist, daß der Spulenkern bei Bewegung des Schaltteils (13) aus seiner Ruhestellung in seine Schaltstellung relativ zur Spule (19) unter Veränderung der Induktivität des ersten Schwingkreises (21) bewegt wird.

7. Einrichtung nach einem oder mehreren der Ansprüche 1 bis 4, dadurch gekennzeichnet, daß das Schaltteil (13) so ausgebildet bzw. angeordnet ist, daß es bei seiner Bewegung aus seiner Ruhestellung in seine Schaltstellung den ersten Schwingkreis (21) öffnet oder schließt.

8. Einrichtung nach Anspruch 7, dadurch gekennzeichnet, daß im Bewegungspfad des Schaltteils (13) ein Schalter (23) des ersten Schwingkreises (21) angeordnet ist, der von dem Schaltteil (13) betätigt wird, wenn es sich aus seiner Ruhestellung in seine Schaltstellung bewegt.

9. Einrichtung nach Anspruch 7, dadurch gekennzeichnet, daß im Bewegungspfad des Schaltteils (13) ein Leitungsabschnitt (25) des ersten Schwingkreises (21) angeordnet ist, der von dem Schaltteil (13) durchtrennt wird, wenn sich das Schaltteil (13) aus seiner Ruhestellung in seine Schaltstellung bewegt.

10. Einrichtung nach einem oder mehreren der vorhergehenden Ansprüche, dadurch gekennzeichnet, daß die Induktivitäten (L₁, L₂) der Schwingkreise (21,22) als stabförmige Spulen (19.1,19.2) ausgebildet sind.

11. Einrichtung nach Anspruch 10, dadurch gekennzeichnet, daß die Spulen (19.1,19.2) der beiden Schwingkreise (21,22) im wesentlichen parallel zueinander angeordnet sind.

12. Einrichtung nach Anspruch 11, dadurch gekennzeichnet, daß die Spulen (19.1,19.2) so angeordnet sind, daß sie sich beim Passieren im wesentlichen überdecken.

13. Einrichtung nach einem oder mehreren der Ansprüche 10 bis 12, dadurch gekennzeichnet, daß die Spulen (19.1,19.2) rechtwinklig zur Längsrichtung des Gurtes (3) angeordnet sind.

14. Einrichtung nach einem oder mehreren der vorhergehenden Ansprüche, dadurch gekennzeichnet, daß die Resonanzfrequenzen der beiden Schwingkreise (21,22) in der Ruhestellung des Schaltteils (13) aufeinander abgestimmt sind.

15. Einrichtung nach einem oder mehreren der vorhergehenden Ansprüche, dadurch gekennzeichnet, daß das Schaltteil (13) in seiner Ruhestellung in an sich bekannter Weise durch eine Feder (14) in Richtung auf seine Schaltstellung vorgespannt und von einem Widerlager (12) in seiner Ruhestellung gehalten ist, welches an der zu überwachenden Schraubverbindung (8') unter Reibschluß gehalten ist, und von dem Schaltteil (13) in eine Freigabestellung bewegt wird, wenn die Vorspannung der Schraubverbindung (8') den vorgegebenen Vorspannungs-Grenzwert unterschreitet.

16. Einrichtung nach Anspruch 14 und 15, dadurch gekennzeichnet, daß an dem an einer Führung (16) geführten, bolzenförmigen Schaltteil (13) ein seitlich von diesem vorstehender Schaltstift (28) fest angeordnet ist, in dessen Bewegungspfad ein mit einem Schaltelement (26) versehener Leitungsabschnitt (25) des im normalen Betriebszustand geschlossenen ersten Schwingkreises (21) verläuft, welches von dem Schaltstift (28) aus seiner Kontaktstellung gedrückt wird, wenn sich das Schaltteil (13) aus seiner Ruhestellung in seine Schaltstellung bewegt.

17. Einrichtung nach einem oder mehreren der vorhergehenden Ansprüche, dadurch gekennzeichnet, daß die Auswerteinrichtung (in 24) nur dann ein Warn- oder Abschaltsignal an die Steuereinrichtung gibt, wenn die Ist-Stromstärke bei einer vorgegebenen Anzahl von Gurtumläufen jeweils um wenigstens die vorgegebene Differenz von der Soll-Stromstärke abweicht.

## Claims

1. Apparatus for monitoring the screw prestress of a screwed clamping device (5) for connecting the ends (3') of a bucket elevator belt (3), with a switching element (13) which is disposed on the screw connection (8') and which is in a position of rest if the prestressing is of an adequate magnitude, and which, in the event of a preset prestressing limit not being attained, automatically moves into a switching position which triggers a warning or disconnection signal, characterised in that a first electrical oscillatory circuit (21) with a preset resonant frequency is disposed on the belt (3) in the region of the switching element (13) of the clamping device (5) and adjacent the path of movement of the clamping device (5) a second oscillatory circuit (22) is disposed stationarily, an (active) oscillatory circuit (22) being fed by an AC source (G) and the resonant frequencies of the two oscillatory circuits (21, 22) being tuned to one another in one of the two positions of the switching element (13); in that the resonant frequency of the first oscillatory circuit (21) is changed by the switching element (13) when the latter moves out of its position of rest into its switching position; and in that an ammeter connected to an evaluation and control device (24) is disposed in the active oscillatory circuit (22), the evaluating device comparing the actual current intensity measured on the passing of the two circuits (21, 22) with the set-value current intensity in the normal operative state, and the control device generates a warning or disconnection signal when the actual current intensity deviates from the set-value current intensity by a predetermined difference.

2. Apparatus according to claim 1, characterised in that the active oscillatory circuit (22) fed by the AC source (G) is a series resonant circuit, of which the coil (19.2) and capacitor (20.2) are connected in series.

3. Apparatus according to claim 2, characterised in that the other (passive) oscillatory circuit (21) is connected as a parallel resonant circuit.

4. Apparatus according to one or more of the preceding claims, characterised in that the stationarily disposed second oscillatory circuit (22) is fed by the AC source (G).

5. Apparatus according to one or more of the preceding claims, characterised in that the switching element (13) is a constituent part of the first oscillatory circuit (21) or is connected to a part of the first oscillatory circuit (21).

6. Apparatus according to claim 5, characterised in that the switching element (13) is the coil core of the first oscillatory circuit (21) or is so connected thereto that on movement of the switching element (13) out of its position of rest into its switching position the coil core is moved relatively to the coil (19) with a change of the inductance of the first oscillatory circuit (21).

7. Apparatus according to one or more of claims 1 to 4, characterised in that the switching element (13) is so constructed or disposed that on its movement out of its position of rest into its switching position it opens or closes the first oscillatory circuit (21).

8. Apparatus according to claim 7, characterised in that a switch (23) of the first oscillatory circuit (21) is disposed in the path of movement of the switching element (13) and is actuated by the switching element (13) when it moves out of its position of rest into its switching position.

9. Apparatus according to claim 7, characterised in that a portion (25) of the line of the first oscillatory circuit (21) is disposed in the path of movement of the switching element (13) and is severed by the switching element (13) when the switching element (13) moves out of its position of rest into its switching position.

10. Apparatus according to one or more of the preceding claims, characterised in that the inductances (L₁, L₂) of the oscillatory circuits (21, 22) are constructed in the form of rod-shaped coils (19.1, 19.2).

11. Apparatus according to claim 10, characterised in that the coils (19.1, 19.2) of the two oscillatory circuits (21, 22) are disposed substantially parallel to one another.

12. Apparatus according to claim 11, characterised in that the coils (19.1, 19.2) are so disposed that they substantially overlap on passing.

13. Apparatus according to one or more of claims 10 to 12, characterised in that the coils (19.1, 19.2) are disposed at right angles to the direction of the length of the belt (3).

14. Apparatus according to one or more of the preceding claims, characterised in that the resonant frequencies of the two oscillatory circuits (21, 22) are tuned to one another in the position of rest of the switching element (13).

15. Apparatus according to one or more of the preceding claims, characterised in that the switching element (13) is biased in the direction of its switching position in manner known per se by a spring (14) when in its position of rest and is held in its position of rest by an abutment (12), which abutment (12) is held frictionally against the screw connection (8') for monitoring and is moved into a release position by the switching element (13) when the prestressing of the screw connection (8') falls below the preset prestressing limit.

16. Apparatus according to claims 14 and 15, characterised in that a switching pin (28) projecting laterally from the switching element (13) is fixed on the bolt-shaped switching element (13) guided along a guide (16), in the path of movement of which pin (28) there extends a portion (25) of the line of the first oscillatory circuit (21) which is closed in the normal state of operation, said line portion (25) being provided with a switching element (26), which is pressed out of its contact position by the switching pin (28) when the switching element (13) moves out of its position of rest into its switching position.

17. Apparatus according to one or more of the preceding claims, characterised in that the evaluation device (in 24) gives a warning or disconnection signal to the control device only when the actual current intensity deviates from the set-value current intensity by at least the preset difference in each case after a preset number of belt revolutions.

## Revendications

1. Dispositif pour surveiller la précontrainte de vissage d'un dispositif de serrage vissé (5) destiné à assembler les extrémités (3') d'une courroie d'élévateur à godets (3), comportant une partie de coupure (13) qui est agencée sur l'assemblage vissé (8'), qui se trouve dans une position de repos pour une précontrainte assez grande et qui se déplace automatiquement dans une position de coupure déclenchant un signal d'avertissement ou de coupure lorsque la précontrainte devient inférieure à une valeur limite de précontrainte prédéterminée, caractérisé en ce qu'un premier circuit électrique oscillant (21) avec une fréquence de résonance prédéterminée est agencé sur la courroie (3) dans la zone de la partie de coupure (13) du dispositif de serrage (5) et un deuxième circuit électrique oscillant (22) est agencé fixe au voisinage de la trajectoire de déplacement du dispositif de serrage (5), un circuit oscillant (actif) (22) étant alimenté par une source de courant alternatif (G) et les fréquences de résonance des deux circuits oscillants (21, 22) étant accordées l'une à l'autre dans l'une des deux positions de la partie de coupure (13) ; en ce que la fréquence de résonance du premier circuit oscillant (21) est modifiée par la partie de coupure (13) lorsque la partie de coupure (13) se déplace de sa position de repos à sa position de coupure ; et en ce qu'un dispositif de mesure de courant relié à un dispositif d'évaluation et de commande (24) est agencé dans le circuit oscillant actif (22), le dispositif d'évaluation comparant l'intensité de courant réelle mesurée lors de la rencontre des deux circuits oscillants (21, 22) avec l'intensité de courant de consigne dans l'état de fonctionnement normal et le dispositif de commande produisant un signal d'avertissement ou de coupure lorsque l'écart entre l'intensité de courant réelle et l'intensité de courant de consigne dépasse une différence prédéterminée.

2. Dispositif selon la revendication 1, caractérisé en ce que le circuit oscillant actif (22) alimenté par la source de courant alternatif (G) est un circuit résonant série dont la bobine (19.2) et le condensateur (20.2) sont branchés en série.

3. Dispositif selon la revendication 2, caractérisé en ce que l'autre circuit oscillant (passif) (21) est branché comme un circuit résonant parallèle.

4. Dispositif selon une ou plusieurs des revendications précédentes, caractérisé en ce que le deuxième circuit oscillant (22) agencé fixe est alimenté par la source de courant alternatif (G).

5. Dispositif selon une ou plusieurs des revendications précédentes, caractérisé en ce que la partie de coupure (13) fait partie du premier circuit oscillant (21) ou est reliée à une partie du premier circuit oscillant (21).

6. Dispositif selon la revendication 5, caractérisé en ce que la partie de coupure (13) est le noyau de bobine du premier circuit oscillant (21) ou est reliée à celui-ci de telle sorte que le noyau de bobine lors du déplacement de la partie de coupure (13) de sa position de repos à sa position de coupure est déplacé par rapport à la bobine (19), modifiant ainsi l'inductance du premier circuit oscillant (21).

7. Dispositif selon une ou plusieurs des revendications 1 à 4, caractérisé en ce que la partie de coupure (13) est conçue et agencée de telle sorte qu'elle ouvre ou ferme le premier circuit oscillant (21) lors de son déplacement de sa position de repos à sa position de coupure.

8. Dispositif selon la revendication 7, caractérisé en ce qu'il est agencé dans la trajectoire de déplacement de la partie de coupure (13) un interrupteur (23), du premier circuit oscillant (21), qui est actionné par la partie de coupure (13) lorsque celle-ci se déplace de sa position de repos à sa position de coupure.

9. Dispositif selon la revendication 7, caractérisé en ce qu'il est agencé dans la trajectoire de déplacement de la partie de coupure (13) un tronçon de conducteur (25), du premier circuit oscillant (21), qui est coupé par la partie de coupure (13) lorsque la partie de coupure (13) se déplace de sa position de repos à sa position de coupure.

10. Dispositif selon une ou plusieurs des revendications précédentes, caractérisé en ce que les inductances (L₁, L₂) des circuits oscillants (21, 22) sont conçues comme des bobines en forme de barres (19.1, 19.2).

11. Dispositif selon la revendication 10, caractérisé en ce que les bobines (19.1, 19.2) des deux circuits oscillants (21, 22) sont agencées sensiblement parallèlement l'une à l'autre.

12. Dispositif selon la revendication 11, caractérisé en ce que les bobines (19.1, 19.2) sont agencées de telle sorte qu'elles se chevauchent sensiblement lors de leur rencontre.

13. Dispositif selon une ou plusieurs des revendications 10 à 12, caractérisé en ce que les bobines (19.1, 19.2) sont agencées en angle droit par rapport au sens de la longueur de la courroie (3).

14. Dispositif selon une ou plusieurs des revendications précédentes, caractérisé en ce que les fréquences de résonance des deux circuits oscillants (21, 22) sont accordées l'une à l'autre lorsque la partie de coupure (13) est dans sa position de repos.

15. Dispositif selon une ou plusieurs des revendications précédentes, caractérisé en ce que la partie de coupure (13) dans sa position de repos est précontrainte de façon connue en soi par un ressort (14) en direction de sa position de coupure et est maintenue dans sa position de repos par une butée (12) qui est maintenue par frottement sur l'assemblage vissé à surveiller (8') et qui est déplacée par la partie de coupure (13) dans une position de libération lorsque la précontrainte de l'assemblage vissé (8') devient inférieure à la valeur limite de précontrainte prédéterminée.

16. Dispositif selon les revendications 14 et 15, caractérisé en ce qu'il est agencé fixement sur la partie de coupure (13) en forme d'axe et guidée sur un guide (16) une broche de commutation (28) qui dépasse latéralement de cette partie de coupure et dans la trajectoire de déplacement de laquelle s'étend un tronçon de conducteur (25), muni d'un élément de commutation (26), du premier circuit oscillant (21) fermé dans l'état de fonctionnement normal, lequel tronçon de conducteur est poussé par la broche de commutation (28) hors de sa position de contact lorsque la partie de coupure (13) se déplace de sa position de repos à sa position de coupure.

17. Dispositif selon une ou plusieurs des revendications précédentes, caractérisé en ce que le dispositif d'évaluation (dans 24) ne fournit un signal d'avertissement ou de coupure au dispositif de commande que si l'intensité de courant réelle s'écarte à chaque fois, d'au moins la différence prédéterminée, de l'intensité de courant de consigne pendant un nombre prédéterminé de tours de courroie.
